(19) Europäisches Patentamt
European Patent Office
Office européen des brevets

(11) **EP 4 105 875 A1**

(12) **EUROPEAN PATENT APPLICATION**

(43) Date of publication:
**21.12.2022   Bulletin 2022/51**

(21) Application number: **21179994.5**

(22) Date of filing: **17.06.2021**

(51) International Patent Classification (IPC):
*G06T 5/00* $^{(2006.01)}$

(52) Cooperative Patent Classification (CPC):
**G06T 5/008;** G06T 2207/20016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AGFA NV**
**2640 Mortsel (BE)**

(72) Inventor: **SOONS, Joris**
**2640 Mortsel (BE)**

(74) Representative: **Verbrugghe, Anne Marie L.**
**Agfa HealthCare NV**
**IP Department 3802**
**Septestraat 27**
**2640 Mortsel (BE)**

(54) **METHOD FOR CONTRAST ENHANCEMENT**

(57)    This invention is related to a method for enhancing the contrast and other image quality aspects of an electronic representation of an image that is based on a multi-scale decomposition and recomposition method, wherein the image enhancement steps involve the processing of the detail images by a conversion function, which is optimized by the algorithm itself by means of optimizing the defining parameters of this conversion function by a cost-function based optimization.

Fig. 4

EP 4 105 875 A1

## Description

## Technical Field

The present invention relates to a method and a system for enhancing the image quality of an image that is represented by a digital signal. More in particular it relates to such method for use in a medical radiographic imaging system, such as a digital radiography system.

## Background of the invention

In imaging systems where the final output image has to be evaluated by a human observer a problem arises when the original image as obtained from an image sensing device contains detail information at various degrees of coarseness, within a wide amplitude range. This situation may arise when the sensor has a good signal to noise ratio over a large dynamic range, which is the case with computed radiography or computed tomography.

When a typical image captured by such a device, e.g. a computed radiography image of a knee is to be represented on a film hardcopy (to be viewed on a light-box) or even worse, on a display screen, then contrast of anatomic detail must always be traded off against dynamic range. Given the limited dynamic range of the image output medium (smaller than 500:1 in case of a transparent film, and smaller than 200:1 in case of a flat panel monitor under normal viewing conditions) then the trade-off can be stated extremely as follows:

i) if the entire dynamic range of the diagnostically meaningful signal levels is mapped onto the available output medium dynamic range, then overall contrast will be very low, and for many subtle details, contrast will be below the perceptual threshold level, hence these will be missed by the observer.

ii) if at the other hand only a part of the original dynamic range is mapped onto the output medium dynamic range then all signal levels below this range will all be mapped onto the same (low) output level and all original levels exceeding this range will be mapped onto the same (high) output level.

For that reason, images represented by a digital signal such as medical images are subjected to image processing during or prior to displaying or hard copy recording.

The conversion of grey value pixels into values suitable for reproduction or displaying may comprise a multi-scale image processing method (also called multi-resolution image processing method) by means of which the contrast of the image is enhanced.

According to such a multi-scale image processing method an image, represented by an array of pixel values, is processed by applying the following steps. First the original image is decomposed into a sequence of detail images $d_k$ at multiple scales (or resolution levels) k = [0,1, ...,L - 1] and occasionally a residual image. Next, the pixel values of the detail images are modified by applying to these pixel values at least one conversion. Finally, a processed image is computed by applying a reconstruction algorithm to the residual image and the modified detail images.

It is a principal object of the present invention to provide a method for improving contrast of a digital image over the whole range of signal levels without enlarging the dynamic range. Another object of the present invention is to provide a method for reducing the dynamic range without lowering the contrast of low amplitude details, so that the whole range of signal levels may be visualised on a display or recorded on a recording film with acceptable contrast.

## Summary of invention

The present invention provides a method for enhancing the contrast of an electronic representation of an original image represented by an array of pixel values by processing said image, said processing comprising the steps of a) decomposing said digital image into a set of detail images $d_k$ at multiple resolution levels $k$ and a residual image at a resolution level lower than said multiple resolution levels, b) processing at least one of said detail images $d_k$ by applying a multiplicative amplification image $a_k$ governed by a parameter-set $p_{k\,optimal}$, to obtain at least one processed detail image $d_{k\,optimal}$, c) computing a processed image by applying a reconstruction algorithm to the residual image, the unprocessed detail images $d_k$ and the at least one processed detail images $d_k$ optimal, said reconstruction algorithm being such that if it were applied to the residual image and the detail images without processing, then said digital image or a close approximation thereof would be obtained, characterized in that said processing comprises the steps of: d) calculating said parameter-set $p_{k\,optimal}$, by optimizing a cost function L that is calculated from a processed detail image $d_{k\,out}$ and that uses a parameter-set $p_k$ as variables, said processed detail image $d_{k\,out}$ being obtained by applying a multiplicative amplification image $a_k$ governed by said parameter-set $p_k$ on said detail image $d_k$, and e) calculating said at least one processed detail image $d_k$ optimal by applying said optimal values $p_{k\,optimal}$ to said multiplicative amplification image $a_k$ at resolution level k on said detail image $d_k$.

The decomposition is performed so that each pixel value in said original image is equal to the sum of the corresponding pixel value of said residual image incremented by the corresponding pixel value of each of said detail images, said residual and detail images being brought into register with the original image by proper interpolation if their number of pixels is not equal to the number of pixels of the original image, and so that

i. the mean of all pixel values in every detail image is zero;

ii. the spatial frequency of every detail image is limited to a specific frequency band, said frequency band being defined as the compact region in the spatial frequency domain which contains nearly all (say 90%) of the spectral energy of the basic frequency period of said discrete detail image, adjusted to the original spatial frequency scale if said detail image contains less pixels than said original image;

iii. every detail image corresponds to a different spatial frequency band, in such a way that the entire spatial frequency domain ranging from - pi to pi radians per pixel along both spatial frequency axes is covered by said spatial frequency bands associated with all said detail images considered within the decomposition;

iv. each spatial frequency band associated with one of said detail images may partially overlap the neighbouring bands without being fully included by a frequency band associated with another detail image;

v. the number of pixels within each detail image is at least the number of pixels required by the Nyquist sampling criterion, so as to avoid aliasing,

vi. at least two of said spatial frequency bands are considered in the course of said decomposition.

The processed image is computed as the pixel-wise sum of all modified detail images incremented by the corresponding pixel value in the residual image, said residual and detail images being brought into register with the original image by proper interpolation if their number of pixels is not equal to the number of pixels of the original image.

The electronic image representation is generally obtained by an acquisition apparatus or acquisition section. Then, in the processing section said image representation is decomposed into detail images at multiple resolution levels and a residual image at still lower resolution, these detail images are modified and a processed image is computed by means of a reconstruction algorithm. Next the processed image can be applied to an output section or output apparatus. The acquisition section can be any apparatus or part thereof for obtaining an electronic representation of an image.

For application in the medical field the acquisition unit can be an apparatus wherein an electronic representation of an image is obtained directly such as a medical scanner, a tomography apparatus, an image intensifier, etc. or alternatively an apparatus wherein an electronic representation of an image is obtained through the intermediary of a storage device such as a radiographic film or a photostimulable phosphor screen.

The output section can be a hard-copy recording apparatus such as a laser printer or a thermal printer etc. or it can be a visual display apparatus such as a monitor.

The image processing method of the present invention has been developed for the purpose of improving contrast of a digital image over the whole range of signal levels without enlarging the dynamic range in a system for reproducing or displaying an image read-out of a photostimulable phosphor screen.

Further details relating to the apparatus as well as to different embodiments of the contrast enhancing method are described hereinbelow with reference to the drawings.

## Brief description of drawings

Fig. 1 is a block scheme generally illustrating an apparatus according to the present invention.

Fig. 2 is a specific embodiment of an image acquisition apparatus, that reads out a phosphor plate 13, that was exposed by an X-ray source 10 in a storage phosphor cassette 12.

Fig. 3 is another embodiment of image acquisition apparatus, being a DR detector.

Fig. 4 is a block scheme illustrating the different steps of the contrast enhancing method.

Fig. 5 illustrates one way of performing the decomposition step in a method according to the present invention.

Fig. 6 illustrates an embodiment of a reconstruction algorithm.

Fig. 7 shows the coefficients of an example of a Gaussian filter.

## Description of embodiments

In the following detailed description, reference is made in sufficient detail to the above referenced drawings, allowing those skilled in the art to practice the embodiments explained below.

The contrast enhancement algorithm of the present invention is applicable to all multi-scale detail representation methods from which the original image can be computed by applying the inverse transformation. Preferably the multi scale representation has a pyramidal structure such that the number of pixels in each detail image decreases at each coarser resolution level.

State-of-the-art multi-scale algorithms decompose an image into a multi-scale representation comprising detail images representing detail at multiple scales and a residual image. Some of the important multi-scale decompositions are the wavelet decomposition, the Laplacian-of-Gaussians (or LoG decomposition), the Difference-of-Gaussians (or DoG) decomposition and the Burt pyramid.

The wavelet decomposition is computed by applying a cascade of high-pass and low-pass filters followed by a subsampling step. The high-pass filter extracts the detail information out of an approximation image $g_k$ at a specific scale $k$ ($g_0$ being the original image at the original scale 0). In the Burt pyramid decomposition, the detail information is extracted out of an approximation image at scale $k$ by subtracting the upsampled version of the approximation image at scale $k+1$.

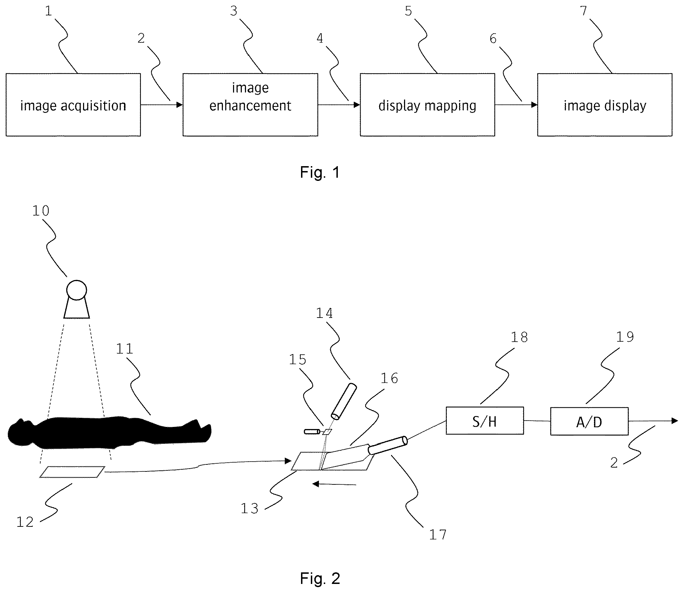

A simplified block diagram of an apparatus according to the present invention is shown in Fig. 1. An image acquisition unit 1 acquires a digital image by sampling the output signal of an image sensor, such as a CCD sensor, a video camera, or an image scanner, an image intensifying tube, quantizes it using an A/D convertor into an array of pixel values, called raw or original image 2, with pixel values typically 8 to 12 bits long, temporarily stores the pixel values in memory if desired, and transmits the digital image 2 to an image enhancement unit 3, where the image contrast is adaptively enhanced in accordance with the present invention, next the enhanced image 4 is transmitted to the display mapping section 5 which modifies the pixel values according to a contrast curve, such that the relevant image information is presented in an optimal way, when the processed image 6 is visualised on an image output device 7, which produces either a hardcopy on transparent film or on paper, or a viewable image on a digital monitor or display screen.

A preferred embodiment of image acquisition unit 1 is shown in Fig. 2. A radiation image of an object 11 or part thereof, e.g. a patient is recorded onto a photostimulable phosphor plate by exposing said plate to X-rays originating from an X-ray source 10, transmitted through the object. The photostimulable phosphor plate 13 is conveyed in a cassette 12.

In a radiation image readout apparatus the latent image stored in the photostimulable phosphor plate is read out by scanning the phosphor sheet with stimulating rays emitted by a laser 14. The stimulating rays are deflected according to the main scanning direction by means of a galvanometric deflection device 15. The secondary scanning motion is performed by transporting the phosphor sheet in the direction perpendicular to the scanning direction. A light collector 16 directs the light obtained by stimulated emission onto a photomultiplier 17 where it is converted into an electrical signal, which is next sampled by a sample and hold circuit 18, and converted into a 12 bit digital signal by means of an analog to digital converter 19. From there the digital image 2, called raw or original image, is sent to the enhancement section 3.

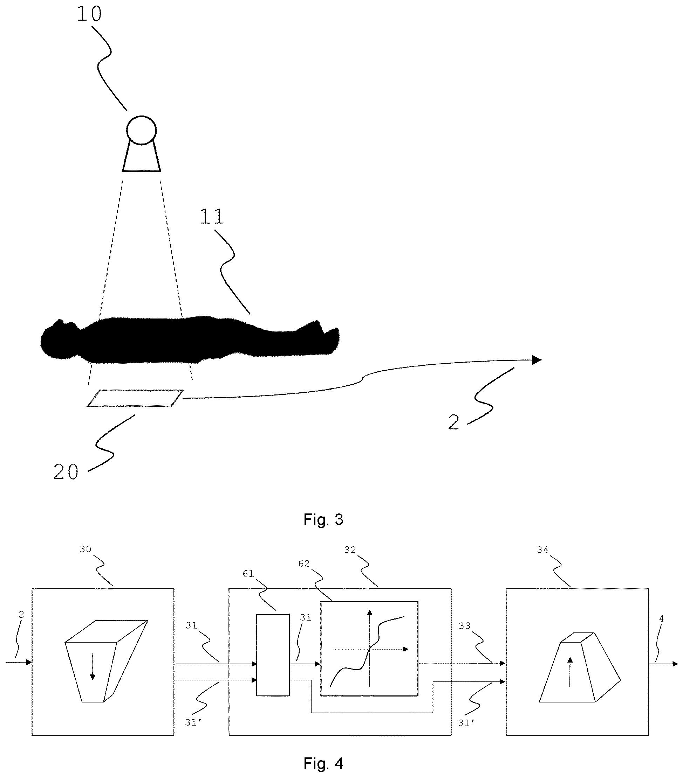

In another embodiment of image acquisition unit 1 is shown in Fig. 3, a radiation image of an object 11 or part thereof, e.g. a patient is recorded onto a digital detector or direct radiography (DR) detector. The digital image 2 is directly produced by the detector unit.

The image enhancement system 3 consists of three main parts, schematically drawn in Fig. 4. In a decomposition section 30 the original image 2 is decomposed into a sequence of detail images, which represent the amount of detail present in the original image at multiple resolution levels, from fine to coarse.

After the last decomposition step a residual image 31' may be left. The resulting detail images 31, which represent the amount of local detail at successive resolution levels are next modified in modification section 32 by means of a non-linear mapping operation.

In a state of the art methods as the one disclosed in EP 527 525 a contrast enhanced version of the image is created by conversion in the modification section 32 of the pixel values in the detail images followed by multi-scale reconstruction. All above implementations of multiscale decomposition have a common property. Each pixel value in the detail images can be computed out of an approximation image by combining the pixel values in a moving neighbourhood.

In the above cases the combining function is a weighted sum. For the wavelet decomposition the pixel values in the detail image at scale k are computed as:

$$d_{k+1} = \downarrow (h_d * g_k)$$

$$g_{k+1} = \downarrow (l_d * g_k)$$

with $h_d$ a high-pass filter, $l_d$ a low-pass filter, * the convolution operator and $\downarrow$ the subsampling operator (i.e. leaving out every second row and column).

For the wavelet reconstruction the contrast enhanced approximation image at scale $k$ is computed as:

$$h_k = l_r * (\uparrow h_{k+1}) + h_r * (\uparrow f_k(d_k(i,j), var_k(i,j)))$$

with $h_r$
a high-pass filter, $l_r$ a low-pass filter and $\uparrow$ the upsampling operator (i.e. inserting pixels with value 0 in between any two rows and columns).

For the Burt decomposition the pixel values in the detail image at scale *k* are computed as:

$$d_k = g_k - 4g * (\uparrow g_{k+1})$$

or

$$d_k = g_k - 4g * (\uparrow (\downarrow (g * g_k)))$$

or

$$d_k = (1 - 4g * (\uparrow (\downarrow g))) * g_k$$

with *g* a Gaussian low-pass filter and 1 the identity operator.

For the Burt reconstruction the contrast enhanced approximation image at scale k is computed as:

$$h_k = 4g * (\uparrow h_{k+1}) + f_k(d_k(i,j), var_k(i,j))$$

with $f_k(d_k(i,j), var_k(i,j))$ the conversion operator.

The multi-scale detail pixel values as weighted sums. Suppose that in the Burt multi-scale decomposition a 5x5 Gaussian filter is used with coefficients $w_{k,l}$ with k = -2,...,2 and l = -2,..., 2 the subsampling operator removes every second row and column and the upsampling operator inserts pixels with value 0 in between any two rows and columns.

The pixel at position *i,j* in the approximation image $g_{k+1}$ is computed as:

$$g_{k+1}(i,j) = \sum_{s=-2}^{2} \sum_{t=-2}^{2} w_{s,t} g_k(2i + s, 2j + t)$$

The pixel at position *i,j* in the upsampled image $u_k$ is computed as :

$$u_k(i,j) = \begin{cases} \sum_{s=-2}^{2} \sum_{t=-2}^{2} w_{s,t} g_k(i + s, j + t), & \text{if i and j are even} \\ 0 & \text{if i and j are note even} \end{cases}$$

The pixel at position *i,j* in the upsampled, smoothed image $gu_k$ is computed as:
$gu_k(i,j)$

$$= \begin{cases} \sum\limits_{m=\{-2,0,2\}} \sum\limits_{n=\{-2,0,2\}} w_{m,n} \sum\limits_{s=-2}^{2} \sum\limits_{t=-2}^{2} w_{s,t} g_k(i+s+m,j+t+n), & \text{if i and j are even} \\[2em] \sum\limits_{m=\{-1,1\}} \sum\limits_{n=\{-2,0,2\}} w_{m,n} \sum\limits_{s=-2}^{2} \sum\limits_{t=-2}^{2} w_{s,t} g_k(i+s+m,j+t+n), & \text{if i is odd and j is even} \\[2em] \sum\limits_{m=\{-2,0,2\}} \sum\limits_{n=\{-1,1\}} w_{m,n} \sum\limits_{s=-2}^{2} \sum\limits_{t=-2}^{2} w_{s,t} g_k(i+s+m,j+t+n), & \text{if i is even and j is odd} \\[2em] \sum\limits_{m=\{-1,1\}} \sum\limits_{n=\{-1,1\}} w_{m,n} \sum\limits_{s=-2}^{2} \sum\limits_{t=-2}^{2} w_{s,t} g_k(i+s+m,j+t+n), & \text{if i and j are odd} \end{cases}$$

Finally, the pixel at position *i,j* in the detail image $d_k$ is computed as :

$$d_k(i,j) = \begin{cases} g_k(i,j) - 4 \sum\limits_{m=\{-2,0,2\}} \sum\limits_{n=\{-2,0,2\}} w_{m,n} \sum\limits_{s=-2}^{2} \sum\limits_{t=-2}^{2} w_{s,t} g_k(i+s+m,j+t+n), & \text{if i and j are even} \\[2em] g_k(i,j) - 4 \sum\limits_{m=\{-1,1\}} \sum\limits_{n=\{-2,0,2\}} w_{m,n} \sum\limits_{s=-2}^{2} \sum\limits_{t=-2}^{2} w_{s,t} g_k(i+s+m,j+t+n), & \text{if i is odd and j is even} \\[2em] g_k(i,j) - 4 \sum\limits_{m=\{-2,0,2\}} \sum\limits_{n=\{-1,1\}} w_{m,n} \sum\limits_{s=-2}^{2} \sum\limits_{t=-2}^{2} w_{s,t} g_k(i+s+m,j+t+n), & \text{if i is even and j is odd} \\[2em] g_k(i,j) - 4 \sum\limits_{m=\{-1,1\}} \sum\limits_{n=\{-1,1\}} w_{m,n} \sum\limits_{s=-2}^{2} \sum\limits_{t=-2}^{2} w_{s,t} g_k(i+s+m,j+t+n), & \text{if i and j are odd} \end{cases}$$

Generally, the pixel at position *i,j* in the detail image $d_k$ can be computed as a weighted sum of pixels in the approximation image at the same or smaller scale *k, k* - 1, *k* - 2,... :

$$d_k(i,j) = g_l(ri,rj) - \sum_m \sum_n v_{m,n} g_l(ri+m,rj+n)$$

with $l \in \{0,.., k\}$ and r = *subsampling_factor*$^{(1-k)}$
Because,

$$\sum_m \sum_n v_{m,n} = 1$$

the pixel at position *i,j* in the detail image $d_k$ can be computed as:

$$d_k(i,j) = g_l(ri,rj) - \sum_m \sum_n v_{m,n} g_l(ri+m,rj+n)$$

$$d_k(i,j) = \sum_m \sum_n v_{m,n} \, g_l(ri,rj) - \sum_m \sum_n v_{m,n} g_l(ri+m,rj+n)$$

$$d_k(i,j) = c_k(i,j) = \sum_m \sum_n v_{m,n} \, (g_l(ri,rj) - g_l(ri+m,rj+n))$$

The term $(g_l(ri,rj) - g_l(ri+m, rj+n))$ is called the translation difference. It expresses the difference in pixel value between a central pixel and a neighbouring pixel in an approximation image. It is a measure of local contrast. The weighted sum of the translation differences is called a centre difference $c_k(i,j)$. The weights can be chosen such that the center difference images are identical to the multi-scale detail images or that they are a close approximation of the multi-scale detail images. In a similar way as disclosed higher, it can be proven that the detail images in other multi-scale decomposition methods can also be represented as a combination of translation difference images.

According to a specific embodiment of this method, the center difference image may be computed by applying a linear function as a combining operator to the translation difference images. An example of such a linear function is

$$\sum_m \sum_n v_{m,n}(g_l(ri,rj) - g_l(ri+m,rj+n))$$

such that this equation equals the detail image itself on condition that:

$$\sum_m \sum_n v_{m,n} = 1$$

In one embodiment, the statistical measure of translation difference image pixel value can be calculated as the local variance of translation difference image pixel value. One way to calculate this, is by applying a squaring operator as a combining operator to the translation difference images:

$$var_k(i,j) = \sum_m \sum_n v_{m,n}\big(g_l(ri,rj) - g_l(ri+m,rj+n)\big)^2$$

A correct way to define variance is as the second central moment of a distribution or the expectation of the squared deviation of a random variable from its mean.

And thus, in another embodiment, the local variance of the translation difference image pixel value is computed as the weighted average of the squared difference of the translation difference image and the weighted average of the translation difference around each pixel of interest:

$$var_k(i,j) = \sum_m \sum_n v_{m,n}\Bigg( g_l(ri,rj) - g_l(ri+m,rj+n) \\ - \sum_m \sum_n v_{m,n}\big(g_l(ri,rj) - g_l(ri+m,rj+n)\big) \Bigg)^2$$

Or since $d_k(ri,rj) = \sum_m\sum_n v_{m,n}(g_l(ri,rj) - g_l(ri+m,rj+n))$, the local variance of translation difference image pixel value can also be computed as the weighted average of the squared difference of the translation difference image and the detail image around each pixel of interest:

$$var_k(\text{i},\text{j}) = \sum_m \sum_n v_{m,n}\big(g_l(ri,rj) - g_l(ri+m,rj+n) - d_k(ri,rj)\big)^2$$

or in case that

$$\sum_m \sum_n v_{m,n} = 1$$

then

$$var_k(\text{i},\text{j}) = -d_k^2 + \sum_m \sum_n v_{m,n}\big(g_l(ri,rj) - g_l(ri+m,rj+n)\big)^2$$

It has to be noted that the variance of the approximation image, as used in Mei et al. 2002 is defined differently as follows:

$$var_k(\text{i},\text{j}) = \sum_m \sum_n v_{m,n}\left( g_l(ri+m,rj+n) - \sum_m \sum_n v_{m,n}\big(g_l(ri+m,rj+n)\big) \right)^2$$

As an example of an NxN neighbourhood, a 3x3 neighbourhood has to be understood as a surface of 3x3 image pixels around a central pixel, such that m and n are both {-1,0,1} and $v_{m,n} = \dfrac{1}{9}$ for the mathematical notations above. $v_{m,n}$ can also have Gaussian weights.

In another embodiment, the statistical measure of translation difference image pixel value is not limited to a variance of said translation difference image pixel values, but can also be any combination of different statistical measures or functions of said translation difference image pixel values, as for instance disclosed in EP3822907.

For instance, in another embodiment, the statistical measure of the translation difference image pixel value is not computed with an average operator, but as a predetermined percentile.

As example, this predetermined percentile may be defined as taking the maximum (or as the 100% percentile):

$$var_k(i,j) = \max_{m,n}\big(g_l(ri,rj) - g_l(ri+m,rj+n) - d_k(ri,rj)\big)^2$$

Alternatively, other percentile values may be considered; instead of using the maximum (=100% percentile), a different percentile value can be taken such as for instance the median (50%) or 95%-percentile.

In another embodiment, other values for statistical dispersion of the translation difference image pixel value can be taken. For instance, the difference of a first predetermined percentile value and a second predetermined percentile value of the translation difference image pixel values within a neighborhood. As an example, we can take the range of translation difference image pixel value around a pixel, where the first predetermined percentile is the maximum, and the second predetermined percentile the minimum:

$$\max_{m,n}\big(g_l(ri,rj) - g_l(ri+m,rj+n)\big) - \min_{m,n}\big(g_l(ri,rj) - g_l(ri+m,rj+n)\big)$$

Another example is the interquartile range.

In another embodiment, other multiscale decomposition methods based on steerable pyramids may be used, such as for instance disclosed in European application EP20180161.0, and wherein different orientations are used:

$$d_{kn}(i,j) = A_{kn} * \cos \phi_{kn}(i,j)\, d_{kn}$$

being the resulting detail image at scale k and orientation n, $A_{kn}$ the amplitude and $\phi_{kn}$ the phase from the steerable pyramid decomposition.

They are defined by the quadrature pair $b_{kn}$ and $c_{kn}$,:

$$A_{kn} = \sqrt{d_{kn}^2 + c_{kn}^2}$$

$$\phi_{kn} = atan\left(\frac{c_{kn}}{d_{kn}}\right)$$

Where $d_{kn}$ is the detail image at scale (k) and orientation (n), and $c_{kn}$ is the conjugate detail image at scale (k) and orientation (n).

Conversion operator

The goal of a conversion operator is to modify the detail images $d_k$ into enhanced detail images $d_{k\ out}$, such that after reconstruction an enhanced image is obtained. The conversion operator referred to in this invention generally corresponds to a multiplicative amplification image (noted as $a_k$), but may as well be represented as a mapping function $f_k$. The term multiplicative amplification image implies that this conversion operator corresponds to an (image) matrix having the same dimensions as the detail image to be conversed or enhanced. As a matter of fact, the multiplicative amplification image $a_k$ is a conversion function that may be based on the original detail image, wherein the zones to be emphasised or enhanced will have relatively higher pixel values to express the desired local amplification. The multiplicative amplification image $a_k$ is "applied" to the detail image $d_k$ to obtain the modified detail image $d_{k\ out}$ by means of a pixel-by-pixel multiplication of the corresponding pixel-values in both matrices or images.

$$d_{k\ out}(i,j) \;=\; a_k(i,j)\, d_k(i,j)$$

The conversion operator may however also be represented by a mapping function $f_k$ that operates on a pixel $(i,j)$, rather than a multiplicative amplification image $a_k$ (that operates on an image). It is clear that mapping function $f_k$ and multiplicative amplification image $a_k$ are interchangeable by following formula:

$$f_k(d_k(i,j)) \;=\; a_k(i,j)\, d_k(i,j)$$

The conversion operator is governed by a parameter-set $p_k$ that is different for each scale $k$. This means that the conversion operator can be expressed as a function (in principle any type of function) having the parameter-set $p_k$ as it's defining parameters.

$$f_k(d_k(i,j); p_k)$$

or that the amplification image $a_k$ can be expressed as a function of said parameter-set $p_k$,

$$a_k(d_k(i,j); p_k)$$

Different approaches to obtain a suitable conversion operator exist.

Referring to Fig. 4 a preferred embodiment of the modification section 32 in accordance with the findings of the present invention comprises a memory 61 for temporarily storing the detail images 31 and the residual image 31', and a conversion function 62 which converts and enhances each detail image $d_k$ according to a multiplicative amplification image $a_k$:

$$d_{k\,out}(i,j) = a_k(i,j)\,d_k(i,j)$$

The multiplicative amplification image $a_k$ may be a function of $d_k$ such as, for instance:

$$a_k(i,j) = \frac{f_k(d_k(i,j))}{d_k(i,j)}$$

,wherein $f_k$ is a mapping function or enhancement function that maps the detail image to the enhanced detail image.

Where in a preferred embodiment, the multiplicative amplification image $a_k$ may be a function of $\sqrt{var_k(i,j)}$ , which is the square root of local variance for each pixel of interest, such that:

$$a_k(i,j) = \frac{f_k(\sqrt{var_k(i,j)})}{\sqrt{var_k(i,j)}}$$

Or where in again another embodiment, the multiplicative amplification image $a_k$ may be a combination of $d_k$ and $var_k$:

$$a_k(i,j) = \frac{\sqrt{var_k(i,j)}}{|d_k(i,j)|n_s}|d_k(i,j)|$$

wherein $|d_k(i,j)|$ is the absolute value of the detail image $d_k(i,j)$, and $n_s$ is a parameter to control the noise suppression level. $n_s$ is chosen for each scale in such a way that $\sqrt{var_k(i,j)}$ and $|d_k(i,j)|$ have a similar order of magnitude. A higher value of $n_s$ results in more attenuation, a lower value in more amplification. For finer scales, with typically more noise, a larger noise suppression parameter is chosen, for coarser scales a smaller noise suppression is chosen. As an example, the noise suppression parameter $n_s$ = 2.4 at scale 0, whereas $n_s$ =1 at scale 1 results in natural looking noise suppression in the reconstructed image.

In another embodiment the conversion step is applied to the translation differences. Contrast enhancement is obtained by applying the conversion step to the translation differences:

$$f_k(d_k(i,j)) \sim \sum_m \sum_n v_{m,n} f_k\big(g_k(ri,rj) - g_k(ri+m, rj+n)\big)$$

Resulting in following amplification image:

$$a_k(i,j) = \frac{\sum_m \sum_n v_{m,n} f_k\big(g_k(ri,rj) - g_k(ri+m, rj+n)\big)}{d_k(i,j)}$$

In another embodiment, other multiscale decomposition methods based on steerable pyramids may be used:

$$d_{kn}(i,j) = \mathrm{a}_{kn}(A_{kn}(i,j)) * A_{kn} * \cos\phi_{kn}(i,j)\, d_{kn}$$

being the resulting detail image at scale k and orientation n, $A_{kn}$ the amplitude and $\phi_{kn}$ the phase from the steerable pyramid decomposition, and $a_{kn}$ the multiplicative amplification in a preferred embodiment defined as:

$$a_{kn}(i,j) = \frac{f_{kn}(A_{kn}(i,j))}{A_{kn}(i,j)}$$

As stated above, it is important that the conversion operator is defined with a parameter-set $p$. In a first embodiment, the mapping function $f_k$ is defined as:

$$f_k : x \rightarrow \alpha\, x^p$$

For the preferred embodiment following amplification image is obtained:

$$a_k(i,j) = \alpha \frac{\sqrt{\mathrm{var}_k(i,j)}^{\,p}}{\sqrt{\mathrm{var}_k(i,j)}} = \alpha \sqrt{\mathrm{var}_k(i,j)}^{\,p-1}$$

where the power $p$ is chosen within the interval $0 < p < 1$, preferably within the interval $0.5 < p < 0.9$. A comparative evaluation of a large number of computed radiography images of thorax and bones by a team of radiologists indicated that $p = 0.7$ is the optimal value in most cases. $\alpha$ defines a gain factor at scale k. In this embodiment a single parameter - the power $p$- represents the full parameter-set; the parameter-set comprises only a single parameter in this case.

If this multiplicative amplification factor is applied to a detail image, then all details with a low variance of translation difference images (or elementary contrast) will be boosted relative to the image details which originally have a higher local variance.

In this respect, the above power function $f_k : x \rightarrow \alpha\, x^p$ proved to perform very well, but it is clear that an infinite variety of monotonically increasing mapping functions with a parameter-set $p$ can be found that will enhance subtle details with low variance. The main requirement is that $a_k(i,j)$ is higher, and thus the slope of said mapping function is steeper, in the region of argument values that correspond to low elementary contrast.

When all detail images of the decomposition are modified using the same mapping according to one of the above methods, a uniform enhancement over all scales will be obtained. However, a better result is obtained by choosing slightly different mapping functions for each scale. As a consequence, the parameter-set p can be chosen to be dependent on the scale $k$ of the detail image $d_k$ that is to be enhanced.

$$f_k : x \rightarrow \alpha\, x^{p_k}$$

Many different parameters $p_k$ can be chosen such that an optimization should be done to achieve optimal effects on the resulting image quality.

In an alternative embodiment, excessive noise amplification can be avoided by using a composite mapping function with a parameter set consisting of 3 parameters $(p_1, p_2, c)$ per scale:

$$f_k : x \rightarrow \alpha\, c^{p_2} \left(\frac{x}{c}\right)^{p_1} \qquad if\ x < c$$

$$x \rightarrow \alpha\, x^{p_2} \qquad if\ x \geq c$$

where the power $p_2$ is chosen in the interval $0 < p_2 < 1$, preferably $0.5 < p_2 < 0.9$, and most preferably $p_2 = 0.7$ (however the preferred value of $p_2$ highly depends upon the exact kind of radiological examination, and may vary). The power $p_1$ in this equation should not be smaller than $p_2$: $p_1 \geq p_2$, where the cross-over abscissa c specifies the transition point between both power functions.

Decreasing the power $p_2$ will further enhance the contrast of subtle details, but at the same time the noise component will also be amplified. The noise amplification can be limited by choosing a power value $p_1$ larger than $p_2$, preferably 1.0, so that the slope of the mapping function is not extremely steep for the range of very small abscissae.

Ideally the cross-over abscissa c should be proportional to the standard deviation of the noise component (assuming additive noise), so the lowest amplitude details buried within the noise along with the majority of the noise signals will only be moderately amplified, according to the slope of the functional part controlled by the power $p_1$, while the detail signals just exceeding the noise level will be amplified much more according to the slope of the functional part controlled by the power $p_2$. The decreasing slope of the latter functional part still assures that the subtle details above the noise level are boosted relative to the high amplitude details. In this respect, the above composite power function proved to perform very well, but it is clear that an infinite variety of monotonically increasing mapping functions can be found that will enhance subtle details without boosting the noise to an excessive level.

The main requirement is that $a_k(i,j)$ is higher, and thus the slope of said mapping function is steeper, in the region of argument values that correspond to low elementary contrast than it is either in the sub-range of very small elementary contrast which mostly correspond to noise, or in the range of the larger elementary contrast.

Cost function

From the above, it is clear that an infinite variety of monotonically increasing mapping functions $f_k$ can be found. The parameter-set $p_k$ is typically dependent on the scale $k$ of the detail image $d_k$ that is to be enhanced, but this is not a requirement. Many different parameter-sets $p_k$ can be chosen to modify the behaviour of the mapping functions $f_k$, all of which will have a different effect on the resulting image and image quality.

For this reason, and in this invention an optimization of the parameter-set $p_k$ is performed to achieve the optimal effect of the mapping function $f_k$, or of the multiplicative amplification image $a_k$ on the resulting image quality. The parameter-set $p_k$ (which may consist of multiple individual parameters that define the conversion operator) is considered as the variable for the optimization process. In this optimization process a cost function L will be optimized, resulting in one specific parameter-set $p_{k\ optim}$. This parameter set $p_{k\ optimal}$ will define the optimal conversion operator (optimal amplification image $a_{k\ optimal}$) which is then applied on the detail image $d_k$ at resolution level or scale k to obtain the optimal results in the processed image. The optimization function (which can be an iterative process that evaluates the outcomes of a cost function) thus results in the determination of the optimal parameter-set $p_{k\ optimal}$ that can describe the optimal conversion operator.

In the prior art, such as for instance disclosed in EP527525 "Method and apparatus for contrast enhancement", Vuylsteke & Schoeters, (p.9, 1.42), the optimization of the parameter-set $p_k$ was performed by a comparative evaluation of a large number of computed radiography images by a team of radiologists for each clinical image type (bones, thorax, soft tissue) and for each technical image type (defined by the gray-scale resolution -bit-depth- and spatial resolution of the image). In other words, the optimization of the parameter-set $p_k$ was a manual (or better; human) process, that required human evaluation of the resulting processed images.

In addition, since the optimal values of $p_k$ differ for different images, and especially for the coarser scales, it is the goal of this invention to find these optimal values $p_{k\ optimal}$ based on statistics of the processed detail image or the final processed image, correlated with the original image and detail image. Therefore, a cost function or loss function L is composed, and this cost function is optimized in order to find best values of $p_k$: $p_{k\ optimal}$, which are then applied to the detail image $d_k$ (at resolution level or scale $k$) to obtain the processed detail image $d_{k\ optimal}$, which leads after the recomposition step to the the final processed image $h_0$.

The proper composition of this cost function is important: this cost function should be backed by a meaningful effect on the final image, should ideally show a continuous and smooth progression in function of $p_k$ and should be fast to calculate. In the following section, a number of embodiments are presented illustrating the general concept described above.

Six embodiments of such a cost function L are described in the following section:

1) optimization of parameter-sets $p_k$ based on gray value tissue separation between distinct tissue types: in this embodiment, segmentation maps for at least 2 distinct tissue types are created for an image, such that a group of pixels in the image can be attributed to one of the distinct tissue types. Such a group of attributed pixels in the enhanced approximation image are called the sample sets of the enhanced approximation image at scale $k$, and are then named for instance $h_k^{bone}$ and $h_k^{ST}$ to indicate their related tissue type (bone and soft tissue respectively).

Instead of approximation image at scale k $h_k$, one can also use the reconstructed image $h_0$.

The optimization of the parameters $p_k$ is then performed by maximizing the distance between the sample sets $h_k^{bone}$ and $h_k^{ST}$. In a different embodiment, for instance where lung tissue is the object of interest, this distance between the sample sets of soft tissue and ribs might be minimized.

In one embodiment, maximizing the distance can be achieved by minimizing student t-test $t^2$ for said sample sets:

$$t^2 = \left(\overline{h_k^{bone}} - \overline{h_k^{ST}}\right)^2 / \sigma_\delta^2$$

$\overline{h_k^{bone}}$, $\overline{h_k^{ST}}$ being the mean values of the sample sets for bone and soft tissue (ST). And:

$$\sigma_\delta^2 = \frac{(\sigma_k^{bone})^2}{n^{bone}} + \frac{(\sigma_k^{ST})^2}{n^{ST}}$$

, with $\sigma_k^{bone}$ and $\sigma_k^{ST}$ being the standard deviations of the sample sets for bone and soft tissue (ST).

In another embodiment, maximizing the distance can be achieved by minimizing the Mann-Whitney U test for the sample sets $h_k^{bone}$ and $h_k^{ST}$:

$$U = \sum_{bone} \sum_{ST} S(h_k^{bone}, h_k^{ST})$$

$$S(X,Y) = 1 \; if \; Y < X$$

$$S(X,Y) = \frac{1}{2} \; if \; Y = X$$

$$S(X,Y) = 0 \; if \; Y > X$$

Smaller U-values will result in less grey-values shared by bone and soft tissue and thus a better tissue separation. The segmentation maps for the different tissue types may be based on any segmentation algorithm designed for this purpose known in the art.

2) optimization of parameters $p_k$ to obtain a better overall image contrast based on an entropy measure:

The relative entropy of a signal is calculated as:

$$H(h_k) = -\frac{\sum_{i=0}^{n} P\left(h_{k_i}\right) \log\left(P\left(h_{k_i}\right)\right)}{\log(n)},$$

with $P(h_{k_i})$ as the probability density function (or normalized bin count of histogram) for $h_k$ having value $h_{k_i}$. $n$ is the amount of bins in the normalized histogram. As an extreme example, we could consider that if all $h_k$ would equal $h_{k_i}$, the probability density function is a delta-function and entropy will be zero. In case of histogram equalization, entropy will be one. Different weights can be used for different tissue types. Entropy can be calculated for different sample sets. Typically, high entropy is desirable for e.g. soft tissue and bone, while low entropy is desirable for implants, the collimated area or the background.

3) optimization of parameters $p_k$ to obtain a better overall image contrast based on conservation of mutual information. Non-linear modification of the detail images could impact the amount of mutual information of the enhanced approximation image in comparison with the original approximation image. To a certain extent, this is a wanted effect. Nevertheless, to limit this effect, the mutual information $I(g_k, h_k)$ between input and output is calculated:

$$I(g_k, h_k) = \sum_{x \in g_k} \sum_{y \in h_k} P_{g_k h_k}(x, y) \log\left(\frac{P_{g_k h_k}(x, y)}{P_{g_k}(x) p_{h_k}(y)}\right)$$

, where $P_{g_k h_k}$ is the joint probability density function of $g_k$ and $h_k$ (input and output approximation image or gray value image), and $P_{g_k}$ and $P_{h_k}$ are the marginal probability density function of $g_k$ and $h_k$ respectively. Instead of approximation image at scale k $g_k$ and $h_k$, one can also use the original and reconstructed image $g_0$ and $h_0$.

Higher mutual information between input and output means a higher mutual dependence. Typically, we want to keep $I(g_k, h_k)$ above a certain threshold. Mutual information can be calculated for different sample sets.

In yet another embodiment the mutual information can be replaced by the correlation between the approximation image and the enhanced approximation image.

4) optimization of parameters $p_k$ to obtain a better overall image contrast based on non-linear compression :

$$NL = \frac{\mathrm{Var_{tot}}\left(\log(\sqrt{\mathrm{var_{k\,out}}(i,j)})\right)}{\mathrm{Var_{tot}}\left(\log(\sqrt{\mathrm{var_k}(i,j)})\right)}$$

In this embodiment the variance $\mathrm{Var_{tot}}$ is the global variance over all pixels i,j and all scales k, wherein $var_k$ is the local variance of the original translation difference image pixel value at pixel i,j and scale k or the elementary contrast at pixel i,j and scale k, and wherein $var_{k\,out}(i,j)$ is the local variance of the enhanced translation difference image pixel, this can be approximated by:

$$\sqrt{\mathrm{var_{k\,out}}(i,j)} = f_k\left(\sqrt{\mathrm{var_k}(i,j)}\right)$$

The optimization of the parameters $p_k$ is then performed by evaluating $NL$, the ratio of the $var_{tot}$ for the processed detail images and the original detail images.

In the case that $NL$=1 the variance of elementary contrast in the processed detail images is the same as the original detail image. When $NL$ is smaller than 1, this indicates that the variance of the output is smaller than the original, and the contrast is non-linearly compressed by the conversion operator. This is typically achieved by a conversion operator which increases the elementary contrast in pixels with subtle details and decreases the elementary contrast in pixels with excessive details.

By selecting a target compression parameter $NL$ for a detail image at a certain scale, more compression weight can be attributed to certain scales against which the parameters $p_k$ can then be optimized. NL can also be calculated for different sample sets in order to give more weight for certain tissue types.

5) optimization of parameters $p_k$ to obtain a better overall image linearity based on the calculation on the relative variance: in this embodiment the relative variance (over all scales k) of the logarithm of the amplification for each pixel i,j is calculated:

$$RV(i,j) = 10^{Var(log10(a_k(i,j)))} - 1$$

It is noted that this relative variance $RV(i,j)$ may be calculated using different weights for the different scales $k$. Next, the linearity $LIN$ is calculated as the weighted average of $RV(i,j)$ over all pixels.

$$LIN = \sum_{i,j} w_{i,j} RV(i,j)$$

In the case that *LIN* equals 0, the relative variance for all pixels equals zero, and thus the amplification over all scales is the same and thus no non-linear image enhancement.

Generally, non linear image enhancement is desired across the entire image in order to obtain good image enhancement. However, in specific locations, e.g. sharp transition at implants, linear enhancement is wanted. Therefore location dependent weights $w_{i,j}$ are attributed to these specific locations, which means that selected zones or areas in the image may be attributed a higher weight in order to selectively optimize the cost-function (LIN) for these specific locations. Typically, large weights are attributed to locations where linearity is wanted (e.g. close to metal implants, at large edges,...). These specific locations may be identified through standard segmentation algorithms described in the art, approximation image value, detail image value or a combination thereof.

6) optimization of parameters $p_k$ to obtain a better overall image contrast based on similar amplification.

As stated before we only want slightly different amplifications between scales, in other words, we don't want excessive variation between parameters $p_k$ over the scales. One way to keep this is with LIN cost-function. Another way is to minimize the change of parameters $p_k$ over the scales. Therefore we minimize:

$$\frac{\partial^2 p_k}{\partial k^2}$$

Often a weighted average of multiple cost-functions as described above will be used as a composed cost-function. Optimal weighing of these multiple cost-functions will result in an image dependent parameter set $p_k$ which yield further optimized enhanced images. Alternative cost functions may be further designed to optimize certain image quality aspects of a final processed image, on condition that a cost function can be found or designed that is a measure of the particular image quality aspect.

The cost-function is minimized and the optimal values for the parameter set $p_k$ is searched for. Optimization may be based on any optimization algorithm designed for this purpose known in the art.

Reconstruction

The detail images are modified based on the optimal parameter set $p_k$, starting from the lowest resolution detail image up to the finest level, which is the order in which they are needed in the course of the reconstruction process.

In addition, other enhancements may be applied to $d_k$, $g_k$, $h_k$ prior or after the application of the conversion operator.

In the image reconstruction section 34 the modified detail images 33 are next accumulated at all resolution levels, along with the residual image 31' to compute the enhanced image 4.

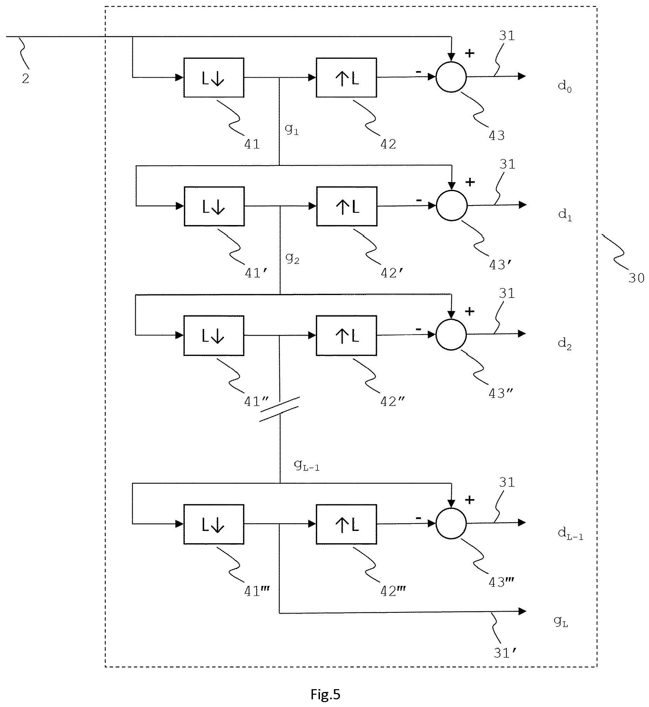

A preferred embodiment of the decomposition process is depicted in Fig. 5. The original image is filtered by means of a low pass filter 41, and subsampled by a factor of two, which is implemented by computing the resulting low resolution approximation image $g_1$ only at every other pixel position of every alternate row.

A detail image bo at the finest level is obtained by interpolating the low resolution approximation $g_1$ with doubling of the number of rows and columns, and pixel-wise subtracting the interpolated image from the original image 2.

The interpolation is effectuated by the interpolator 42, which inserts a column of zero values every other column, and a row of zero values every other row respectively, and next convolves the extended image with a low pass filter. The subtraction is done by the adder 43.

The same process is repeated on the low resolution approximation $g_1$ instead of the original image 2, yielding an approximation of still lower resolution $g_2$ and a detail image $b_1$.

A sequence of detail images $d_k$, $k = [0,1, ...,L - 1]$ and a residual low resolution approximation $g_L$ are obtained by iterating the above process L times. The finest detail image $d_0$ has the same size as the original image. The next coarser detail image $d_1$ has only half as many rows and columns as the first detail image $d_0$. At each step of the iteration the maximal spatial frequency of the resulting detail image is only half that of the previous finer detail image, and also the number of columns and rows is halved, in accordance with the Nyquist criterion.

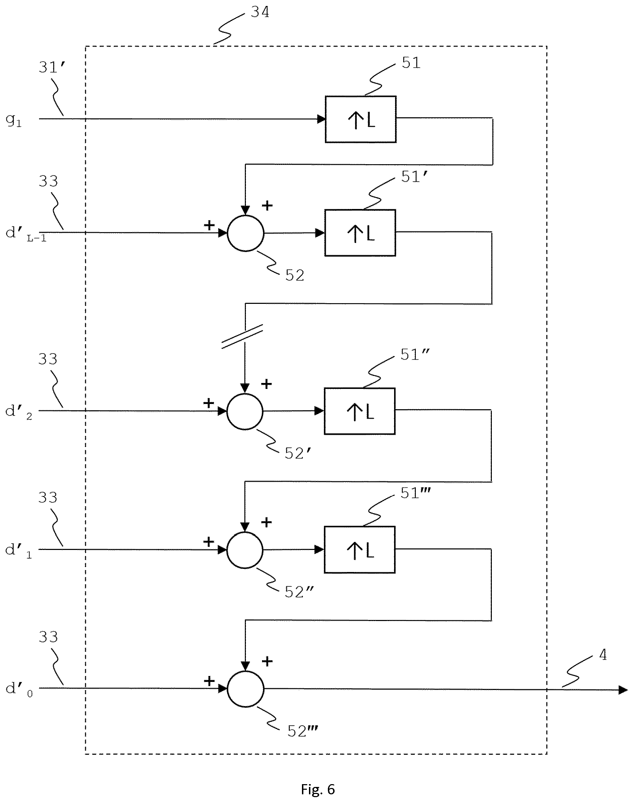

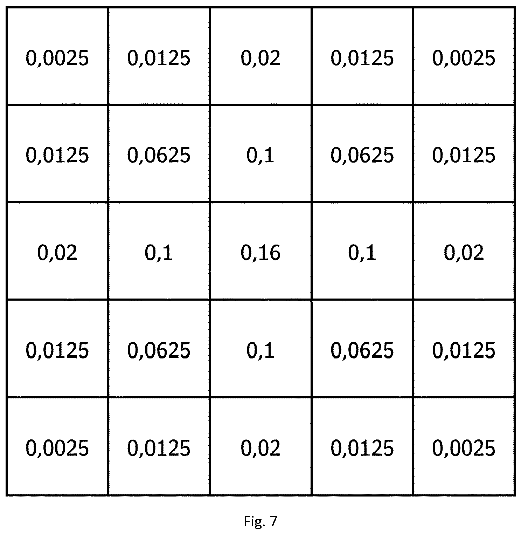

After the last iteration a residual image $g_L$ 31' is left which can be considered to be a very low resolution approximation of the original image. In the extreme case it consists of only 1 pixel which represents the average value of the original image 2. The filter coefficients of the low pass filter of the preferred embodiment are presented in Fig. 7. They correspond approximately to the samples of a two dimensional gaussian distribution on a 5x5 grid. The same filter coefficients are used for the low pass filters 41, 41', ... 41'" at all scales. The same filter kernel with all coefficients multiplied by 4 is also used within the interpolators 42, 42', ... 42'". The factor of 4 compensates for the insertion of zero pixel columns and rows as explained above. The corresponding reconstruction process is depicted in Fig. 6.

The residual image is first interpolated by interpolator 51 to twice its original size and the interpolated image is next pixelwise added to the detail image of the coarsest level $d'_{L-1}$, using adder 52. The resulting image is interpolated and added to the next finer detail image. If this process is iterated L times using the unmodified detail images $d_{L-1} ... d_0$ then an image equal to the original image 2 will result. If at the other hand the detail images are modified before reconstruction according to the findings of the present invention, then a contrast enhanced image 4 will result. The interpolators 51, 51' ... 51'" are identical to those used in the decomposition section.

The image quality of the reproduction of a radiologic image can further be improved by boosting or suppressing the contribution of the detail information as a function of the average approximation values at a certain resolution level.

More specifically the contribution of the detail information is decreased in relatively bright image regions and enhanced in darker regions.

This method provides that the disturbing effect of noise is diminished without reducing the overall sharpness impression of the image reproduction, for the noise perception in bright areas is in general more prominent in bright areas than in the darker regions of a radiograph. To achieve this goal the previously described embodiment is modified according to one of the next implementations.

When the detail images are modified according to one of the above methods, and next accumulated in the previously described reconstruction section according to one of the above reconstruction methods, then the dynamic range of the resulting signal will normally exceed the original range. Therefore the resulting image signal is ultimately reduced to the dynamic range of the original image signal, or even smaller. In the former case the contrast of subtle details will show improved perceptibility in comparison with the original image, in the latter case the same perceptiblity level may be reached with a smaller dynamic range, in accordance with the findings of the present invention. In a preferred embodiment the above reduction of dynamic range is accomplished by means of a display mapping module 5, which maps said reconstructed image signal 4 to an output signal 6 which represents the desired screen brightness or film density. The mapping is monotonic and may be linear or curved, depending on the desired gradation.

## Claims

1. Method for enhancing the contrast of an electronic representation of an original image $g_0$ represented by an array of pixel values by processing said image, said processing comprising the steps of

   a) decomposing said digital image into a set of detail images $d_k$ at multiple resolution levels k and a residual image at a resolution level lower than said multiple resolution levels,
   b) processing at least one of said detail images $d_k$ by applying a multiplicative amplification image $a_{k\ optimal}$ governed by a parameter-set $p_{k\ optimal}$, to obtain at least one processed detail image $d_{k\ optimal}$,
   c) computing a processed image $h_{0\ optimal}$ by applying a reconstruction algorithm to the residual image, the unprocessed detail images $d_k$ and the at least one processed detail images $d_{k\ optimal}$, said reconstruction algorithm being such that if it were applied to the residual image and the detail images without processing, then said digital image or a close approximation thereof would be obtained,

   **characterized in that** said processing comprises the steps of:

   d) calculating said parameter-set $p_{k\ optimal}$, by optimizing a cost function L that is calculated from a processed detail image $d_{k\ out}$, obtained by processing at least one of said detail images $d_k$ by applying a multiplicative amplification image $a_k$ governed by a to be optimized parameter-set $p_k$.

2. Method according to Claim 1, wherein said multiplicative amplification image $a_k$ is a function of $d_k$

$$a_k(i,j) = \frac{\ddot{f}_k(d_k(i,j))}{d_k(i,j)}$$

,wherein $f_k$ is a mapping function that maps said detail image $d_k$ to the enhanced detail image $d_{k\ out}$.

3. Method according to Claim 1, wherein said multiplicative amplification image $a_k$ is a function of the variance of the translation difference image pixel value $\sqrt{\mathrm{var}_k(i,j)}$:

$$a_k(i,j) = \frac{f_k\left(\sqrt{\mathrm{var}_k(i,j)}\right)}{\sqrt{\mathrm{var}_k(i,j)}}$$

4. Method according to Claim 1, wherein said multiplicative amplification image $a_k$ is a function of translation difference images:

$$a_k(i,j) = \frac{\sum_m \sum_n v_{m,n} f_k\left(g_k(ri,rj) - g_k(ri+m,rj+n)\right)}{d_k(i,j)}$$

5. Method according to Claim 1, wherein said multiplicative amplification image $a_k$ is a function of $d_k$, $var_k$ and translation difference images ($g_k(ri,rj)$ - $g_k(ri+m,rj+n)$).

6. Method according to Claim 2, 3, and 4 wherein $f_k$ is a non-linear monotonically increasing mapping function with a slope that gradually decreases with increasing argument values.

7. Method according to Claim 1, wherein said cost function L is calculated from a processed image $h_0$ obtained by applying said reconstruction algorithm to said residual image, said unprocessed detail images $d_k$ and said processed detail image $d_{k\,out}$, and obtained by processing at least one of said detail images $d_k$ by applying a multiplicative amplification image $a_k$ governed by a to be optimized parameter-set $p_k$.

8. Method according to Claim 1, wherein said cost function L is calculated from statistical measures calculated from said processed detail image $d_{k\,out}$.

9. Method according to Claim 8 wherein said cost function L is a student t-test of at least two sample sets $h_0^{bone}$ and $h_0^{ST}$ that are obtained from segmentation maps of the original image $g_0$ of at least 2 distinct tissue types *bone* and *ST* and said processed image $h_0$:

$$t^2 = \left(\overline{h_0^{bone}} - \overline{h_0^{ST}}\right)^2 / \sigma_\delta^2$$

,with $\overline{h_0^{bone}}$, $\overline{h_0^{ST}}$ being the mean values of the sample sets for bone and soft tissue (ST). And:

$$\sigma_\delta^2 = \frac{(\sigma^{bone})^2}{n^{bone}} + \frac{(\sigma^{ST})^2}{n^{ST}}$$

, with $\sigma^{bone}$ and $\sigma^{ST}$ being the standard deviations of the sample sets for bone and soft tissue (ST).

10. Method according to Claim 8 wherein said cost function L is a Mann-Whitney U test of at least two sample sets $h_0^{bone}$ and $h_0^{ST}$ that are obtained from segmentation maps of the original image $g_0$ of at least 2 distinct tissue types *bone* and *ST* and said processed image $h_0$:

$$U = \sum_{bone} \sum_{ST} S(h_0^{bone}, h_0^{ST})$$

$$S(X,Y) = 1 \; if \; Y < X$$

$$S(X,Y) = \frac{1}{2} \; if \; Y = X$$

$$S(X,Y) = 0 \; if \; Y > X$$

**11.** Method according to Claim 1, wherein said cost function L is determined by the relative entropy of said processed image $h_0$ :

$$H(h_k) = -\frac{\sum_{i=0}^{n} P(h_{0_i}) \log\left(P(h_{0_i})\right)}{\log(n)},$$

with $P(h_{0i})$ is the histogram bin count value for value $h_{0i}$, and n amount of bins in said histogram.

**12.** Method according to Claim 1, wherein said cost function L is determined by the mutual information $I(g_0,h_0)$ between said original image $g_0$ and said processed image $h_0$:

$$I(g_0, h_0) = \sum_{x \in g_0} \sum_{y \in h_0} P_{g_0 h_0}(x,y) \log\left(\frac{P_{g_0 h_0}(x,y)}{P_{g_0}(x)p_{h_0}(y)}\right)$$

, where $P_{g_0 h_0}$ is the joint probability density function of $g_0$, said original image and $h_0$ said processed image, and where $P_{g_0}$ and $P_{h_0}$ are the marginal probability density function of $g_0$ and $h_0$ respectively.

**13.** Method according to Claim 1, wherein said cost function L is determined by a ratio of variances $Var_{tot}$ for said processed detail image $d_{k \, out}(i,j)$ and said original detail image $d_k(i,j)$:

$$L = \frac{Var_{tot}\left(\log(\sqrt{var_{k\,out}(i,j)})\right)}{Var_{tot}\left(\log(\sqrt{var_k(i,j)})\right)}$$

wherein the variance $Var_{tot}$ is calculated over all pixels $i,j$ at all scales $k$, for the logarithm of the square root of the local variance $\left(\sqrt{var_k(i,j)}\right)$ of said processed or original detail image:

$$Var_{tot}\left(\log\left(\sqrt{var_k(i,j)}\right)\right)$$

wherein $var_k(i,j)$ is the variance of translation difference images around pixel $i,j$ at scale $k$.

**14.** Method according to Claim 1, wherein said cost function L is determined by the ratio of two global statistical measures Wherein the nominator global statistical measure is calculated from local statistical measures for said processed image $h_0$ and wherein the denominator global statistical measure is calculated from a local statistical measures for said original image $g_0$, wherein:

$$L = \frac{Var_{tot}(Var_{loc(h_0)}(i,j))}{Var_{tot}(var_{loc(g_0)}(i,j))}$$

15. Method according to claim 14 wherein said global statistical measure is the variance $Var_{tot}$ over at least two pixels at at least one scale k, and wherein said local statistical measure is the logarithm of the square root of the variance of translation images $log\sqrt{var_k(i,j)}$, such that

$$NL = \frac{Var_{tot}\left(\log(\sqrt{var_{k\,out}(i,j)})\right)}{Var_{tot}\left(\log(\sqrt{var_k(i,j)})\right)}$$

,wherein Var tot is the variance over all pixels in said image.

16. Method according to Claim 1, wherein said cost function L is determined by calculation of the weighted average of *RV(i,j)* over all pixels.

$$LIN = \sum_{i,j} w_{i,j} RV(i,j)$$

, wherein *RV(i,j)* is calculated for each pixel i,j as the relative variance over all scales k of the logarithm of the multiplicative amplification image $a_k$:

$$RV(i,j) = 10^{Var(log10(a_k(i,j)))} - 1$$

17. Method according to claim 1, wherein said cost function L is a weighted sum of cost functions defined in claim 7-16.

Fig. 1

Fig. 2

10

11

2

20

Fig. 3

30

61  62  32

2  31  31

31'  33  34

31'  4

Fig. 4

Fig.5

Fig. 6

| | | | | |
|---|---|---|---|---|
| 0,0025 | 0,0125 | 0,02 | 0,0125 | 0,0025 |
| 0,0125 | 0,0625 | 0,1 | 0,0625 | 0,0125 |
| 0,02 | 0,1 | 0,16 | 0,1 | 0,02 |
| 0,0125 | 0,0625 | 0,1 | 0,0625 | 0,0125 |
| 0,0025 | 0,0125 | 0,02 | 0,0125 | 0,0025 |

Fig. 7

Europäisches
Patentamt

European
Patent Office

Office européen
des brevets

# EUROPEAN SEARCH REPORT

Application Number

EP 21 17 9994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 527 525 A2 (AGFA GEVAERT NV [BE]) 17 February 1993 (1993-02-17) | 1,2,6 | INV. G06T5/00 |
| Y | * the whole document * | 3-5,7,8 | |
| A | | 9-17 | |
| X | EP 1 517 269 A1 (AGFA GEVAERT [BE]) 23 March 2005 (2005-03-23) | 1-8 | |
| A | * the whole document * | 9-17 | |
| X | LOZA ARTUR ET AL: "Automatic contrast enhancement of low-light images based on local statistics of wavelet coefficients", DIGITAL SIGNAL PROCESSING., vol. 23, no. 6, December 2013 (2013-12), pages 1856-1866, XP055853467, US ISSN: 1051-2004, DOI: 10.1016/j.dsp.2013.06.002 | 1,2 | |
| Y | * page 1856 - page 1861 * | 3-5,7,8 | |
| A | | 9-17 | TECHNICAL FIELDS SEARCHED (IPC) |
| Y,D | EP 3 822 907 A1 (AGFA NV [BE]) 19 May 2021 (2021-05-19) * paragraph [0057] * * paragraph [0075] * | 3,5 | G06T |
| Y | EP 1 933 273 A1 (AGFA HEALTHCARE NV [BE]) 18 June 2008 (2008-06-18) * paragraph [0046] * | 4 | |

-/--

The present search report has been drawn up for all claims

| Place of search | Date of completion of the search | Examiner |
|---|---|---|
| Munich | 30 March 2022 | Rockinger, Oliver |

EPO FORM 1503 03.82 (P04C01)

Europäisches
Patentamt

European
Patent Office

Office européen
des brevets

# EUROPEAN SEARCH REPORT

**Application Number**

EP 21 17 9994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STETTEN GEORGE ET AL: "Image segmentation using the student's t-test and the divergence of direction on spherical regions", ALGORITHMS AND TECHNOLOGIES FOR MULTISPECTRAL, HYPERSPECTRAL, AND ULTRASPECTRAL IMAGERY XIX - PROCEEDINGS OF SPIE, vol. 7623, 4 March 2010 (2010-03-04), pages 76233I-125, XP055905303, US ISSN: 0277-786X, DOI: 10.1117/12.844014 ISBN: 978-1-5106-4548-6 Retrieved from the Internet: URL:https://www.vialab.org/main/Publications/pdf/Stetten_SPIE_2010.pdf> [retrieved on 2022-03-25] * abstract * | 9 | |
| A | Anonymous: "Mann-Whitney test for image segmentation", , 15 September 2020 (2020-09-15), XP055905300, Retrieved from the Internet: URL:https://web.archive.org/web/20200915140419if_/https://mdozmorov.github.io/BIOS567.2017/presentations/03_Image/Mann_Whitney.pdf [retrieved on 2022-03-25] * the whole document * | 10 | TECHNICAL FIELDS SEARCHED (IPC) |

-/--

The present search report has been drawn up for all claims

| Place of search | Date of completion of the search | Examiner |
|---|---|---|
| Munich | 30 March 2022 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 21 17 9994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DU-YIH TSAI ET AL: "Information Entropy Measure for Evaluation of Image Quality", JOURNAL OF DIGITAL IMAGING ; THE JOURNAL OF THE SOCIETY FOR COMPUTER APPLICATIONS IN RADIOLOGY, SPRINGER-VERLAG, NE, vol. 21, no. 3, 19 June 2007 (2007-06-19), pages 338-347, XP019596201, ISSN: 1618-727X * page 338 – page 340 * | 11,12 | |

TECHNICAL FIELDS SEARCHED (IPC)

The present search report has been drawn up for all claims

| Place of search | Date of completion of the search | Examiner |
|---|---|---|
| Munich | 30 March 2022 | Rockinger, Oliver |

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

    see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

```
1. claims: 1-6

   image contrast enhancement based on multi-resolution
   processing including a specification of processing the
   detail images
                         ---


2. claims: 7-17

   image contrast enhancement based on multi-resolution
   processing including a specification of a cost function
   describing the image quality to be achieved
                         ---
```

**EP 4 105 875 A1**

## ANNEX TO THE EUROPEAN SEARCH REPORT
## ON EUROPEAN PATENT APPLICATION NO.

EP 21 17 9994

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2022

| Patent document cited in search report | | Publication date | Patent family member(s) | | Publication date |
|---|---|---|---|---|---|
| EP 0527525 | A2 | 17-02-1993 | NONE | | |
| EP 1517269 | A1 | 23-03-2005 | EP | 1347413 A1 | 24-09-2003 |
| | | | EP | 1517269 A1 | 23-03-2005 |
| | | | JP | 2003283927 A | 03-10-2003 |
| EP 3822907 | A1 | 19-05-2021 | EP | 3822907 A1 | 19-05-2021 |
| | | | WO | 2021094471 A1 | 20-05-2021 |
| EP 1933273 | A1 | 18-06-2008 | NONE | | |

EPO FORM P0459

For more details about this annex : see Official Journal of the European Patent Office, No. 12/82

**EP 4 105 875 A1**

**Patent documents cited in the description**

- EP 527525 A
- EP 3822907 A
- EP 20180161